# EUROPÄISCHE PATENTSCHRIFT

(11) **EP 3 212 955 B1**
(45) Veröffentlichungstag und Bekanntmachung des Hinweises auf die Patenterteilung: **15.04.2020**
(21) Anmeldenummer: 15778325.9
(22) Anmeldetag: 09.10.2015
(51) Int. Cl.: F16D 55/2265

(54) **SCHEIBENBREMSE FÜR EIN NUTZFAHRZEUG**
DISK BRAKE FOR A UTILITY VEHICLE
FREIN À DISQUE POUR UN VÉHICULE UTILITAIRE

(30) Priorität: 30.10.2014 DE 102014115765
(43) Veröffentlichungstag der Anmeldung: 06.09.2017
(73) Patentinhaber: KNORR-BREMSE Systeme für Nutzfahrzeuge GmbH, 80809 München (DE)
(72) Erfinder: FISCHER, Rudolf, 85435 Erding (DE); KIELBASA, Rudolf, 85757 Karlsfeld (DE); BALINT, Peter, 71134 Aidlingen (DE)
(86) Internationale Anmeldenummer: PCT/EP2015/073465
(87) Internationale Veröffentlichungsnummer: WO 2016/066409

(56) Entgegenhaltungen:
- DE-A1- 3 331 665
- DE-A1-102007 001 213
- US-A- 5 730 258

## Beschreibung

Die Erfindung betrifft eine Scheibenbremse für ein Nutzfahrzeug gemäß dem Oberbegriff des Anspruchs 1.

Bei einer solchen, auch unter dem Begriff Schiebesattel-Scheibenbremse bekannten Scheibenbremse, wird der Bremssattel durch Befestigungselemente an einem fahrzeugseitigen Bremsträger angeschlossen.

Hierzu sind Führungsholme beispielsweise durch Verschrauben mit dem Bremsträger verbunden, die andererseits in Gleitlagern des Bremssattels so geführt sind, dass eine, bezogen auf eine an einer Achse des Fahrzeugs verdrehsicher gehaltenen Bremsscheibe, axiale Verschiebung des Bremssattels gegenüber dem ortsfesten Bremsträger möglich ist.

Eines der Gleitlager ist als Festlager mit geringem Gleitspiel ausgebildet und dient im Wesentlichen der axialen Führung des Bremssattels, wobei das Lagerspiel so gering wie möglich gehalten ist.

Das andere Gleitlager hingegen bildet ein Loslager und weist funktionsbedingt ein größeres Lagerspiel auf, da neben der axialen Führung auch ein Toleranzausgleich sowie thermisch bedingte Ausdehnungen berücksichtigt werden müssen.

Als Gleitlager des Festlagers findet eine Metallhülse Verwendung, die verschiebegesichert reibschlüssig in einer Bohrung des Bremssattels gehalten ist.

Dabei besteht die Metallhülse aus einem Buntmetall, beispielsweise Messing oder Bronze, oder einem Verbundmaterial, mit einem Außenmantel aus Stahlblech und einem Innenmantel, der die Führungsfläche für den Führungsholm bildet, aus einem gleitlagertypischen Buntmetall, das z.B. durch Sintern mit dem äußeren Mantel verbunden ist.

Für eine dauerhafte Funktionsfähigkeit sind überdies in die Innen-, also die Führungsfläche des Gleitlagers eine Vielzahl von Näpfchen eingebracht zur Aufnahme von Schmiermitteln.

Alles in allem ist das Gleitlager nur mit einem erheblichen Material- und Fertigungsaufwand zu realisieren, mit den sich daraus ergebenden hohen Kosten, die den steten Forderungen nach einer Kostenminimierung entgegenstehen.

Aus der DE 10 2007 001 213 A1 ist eine Scheibenbremse bekannt, bei der zwischen zwei als Gleitlager dienenden Metallhülsen eine der Rückführung des Bremssattels in seine Ausgangsstellung nach erfolgtem Bremsvorgang dienende Rückstelleinrichtung anzuordnen.

Der Erfindung liegt die Aufgabe zugrunde, eine Scheibenbremse der gattungsgemäßen Art so weiterzuentwickeln, dass sie bei uneingeschränkter Funktionssicherheit kostengünstiger herstellbar ist.

Diese Aufgabe wird durch eine Scheibenbremse mit den Merkmalen des Anspruchs 1 gelöst.

Durch die Erfindung ist der die Führung gegenüber dem Führungsholm übernehmende Materialanteil des Gleitlagers deutlich reduziert, woraus sich eine erhebliche Kosteneinsparung ergibt, da, wie zum Stand der Technik beschrieben, das zur Führung bereitgestellte Material in seinen Beschaffungskosten relativ hoch ist.

Die Breite der, gemäß der Erfindung mindestens zwei Metallhülsen ist derart an den Verschiebeweg des Bremssattels, auch bei abgenutzten Bremsbelägen, angepasst, dass selbst in einer, gegenüber dem Führungsholm maximal verschobenen Stellung des Bremssattels eine ausreichende Führung des Führungsholms gewährleistet ist.

Hierzu, bei gleichzeitiger Optimierung des Materialeinsatzes, ist, wie nach einem weiteren Gedanken der Erfindung vorgesehen, die dem Bremsträger zugewandte Metallhülse kürzer als die gegenüberliegende, den Endbereich des Gleitlagers definierende Metallhülse.

Diese ist so bemessen, dass, wie erwähnt, der Bremssattel auch bei einer maximalen Verschiebung, d.h. bei vollständigem zulässigem Verschleiß des Bremsbelages noch eine ausreichende Führung des Bremssattels am Führungsholm gewährleistet.

Die den Abstand zwischen den beiden Metallhülsen haltende Abstandshülse kann aus einem preiswerteren Material gefertigt sein als die Metallhülsen. Hierzu bietet sich beispielsweise ein Kunststoff an, der so weit eigensteif ist, dass ein Zusammendrücken in axialer Richtung ausgeschlossen ist.

Da die Abstandshülse ausschließlich die Aufgabe einer Abstandswahrung erfüllen muss, sind im Wesentlichen keine Durchmessertoleranzen einzuhalten, wobei die Abstandshülse auch mit Spiel zum Führungsholm positioniert sein kann.

Selbstverständlich besteht auch die Möglichkeit, die Abstandshülse, anstatt aus einem geeigneten Kunststoff aus Metall herzustellen, beispielsweise einem preiswerten Stahlblech oder als Abschnitt eines Rohres.

In einer Weiterbildung nach der Erfindung ist die das Gleitlager aufnehmende Bohrung des Bremssattels als Stufenbohrung ausgebildet, mit einem auf der dem Bremsträger zugewandten Bereich kleineren Durchmesser, wobei dieser Bereich in seiner Tiefe etwa der Länge der eingefügten kürzeren Metallhülse entspricht, die in ihrem Außendurchmesser an den lichten Durchmesser des durchmesserkleineren Bereichs der Bohrung derart angepasst ist, dass sich ein Presssitz ergibt.

Die gegenüberliegende Metallhülse ist demzufolge in ihrem Außendurchmesser um so viel größer, dass ein Einschieben in den durchmesserkleineren Bereich ausgeschlossen ist.

Damit wird gewährleistet, dass das Gleitlager bei der Montage immer korrekt, d.h. seitenrichtig in die Bohrung eingesetzt wird, so dass eine Fehlfunktion durch Platzierung der kürzeren Metallhülse in dem Bereich ausgeschlossen ist, der eine Führung auch in einer maximalen Verschiebeposition des Bremssattels gegenüber dem Führungsholm gewährleisten soll.

Die Montage des Gleitlagers insgesamt erfolgt derart, dass die beiden Metallhülsen und die dazwischen positionierte Abstandshülse auf ein Einführwerkzeug gesteckt werden, beispielsweise einen Dorn, mit dem das Gleitlager dann in die Bohrung eingeschoben wird, die kürzere Metallhülse zuvorderst.

An einer Einschnürung der Bohrung, die als Anschlag für das Gleitlager insgesamt dient, liegt die kürzere Metallhülse in eingeschobener Endstellung an, wobei die Metallhülse auf ihrer der Abstandshülse abgewandten Stirnseite im Außenmantelbereich eine umlaufende Einlaufschräge, vorzugsweise in Form einer Fase, aufweist, so dass ein Einschieben in die Bohrung mit kleinerem Durchmesser problemlos möglich ist.

Statt der genannten Fase an der kürzeren Metallhülse als Einführhilfe kann selbstverständlich auch die Bohrung mit kleinerem Durchmesser im Bereich der Abstufung entsprechend gestaltet sein.

Die in Bezug auf das Festlager beschriebene Erfindung kann selbstverständlich auch bei dem anderen Gleitlager, dem Loslager, zum Einsatz kommen, gegebenenfalls unter entsprechender Modifikation der Metallhülsen und/oder der Abstandshülse, um die gegenüber einem Festlager verschiedenen Funktionen zu berücksichtigen.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: eine Scheibenbremse nach dem Stand der Technik in einer schematischen Draufsicht
- Figuren 2 und 3: jeweils einen Teillängschnitt durch die Scheibenbremse gemäß der Linie II-II in Fig. 1 in verschiedenen Betriebsstellungen.

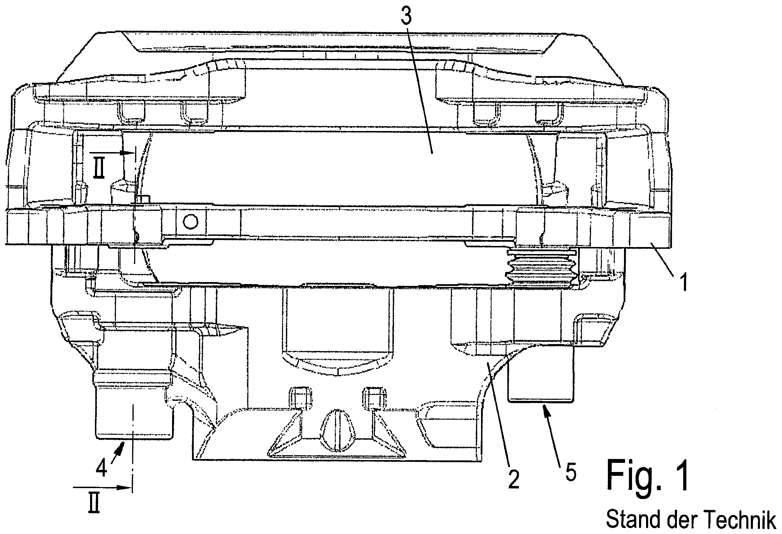

In der Figur 1 ist eine Scheibenbremse für ein Nutzfahrzeug nach dem Stand der Technik dargestellt, die in ihrem Grundaufbau einen Bremssattel 2 aufweist, der eine Bremsscheibe 3 umfasst, die an einer nicht dargestellten Achse des Nutzfahrzeuges verdrehsicher befestigt ist.

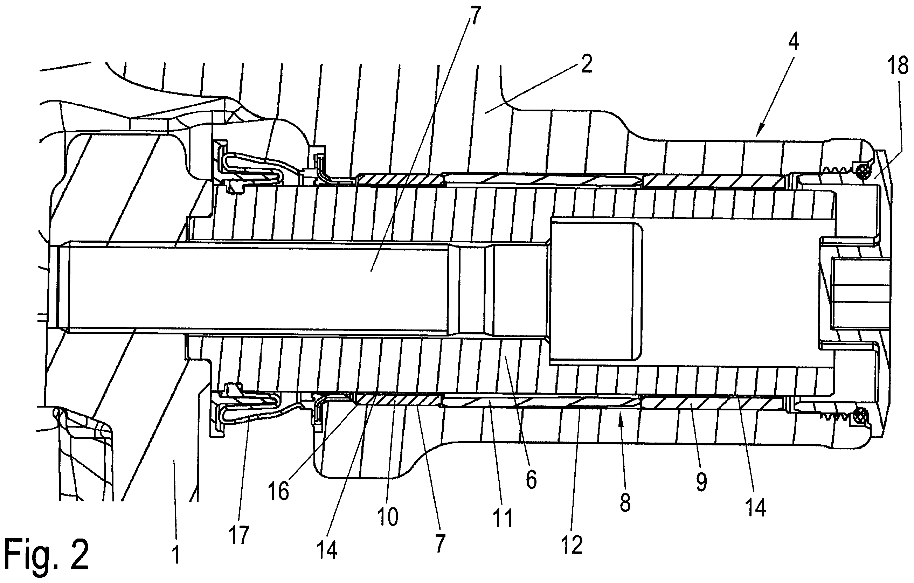

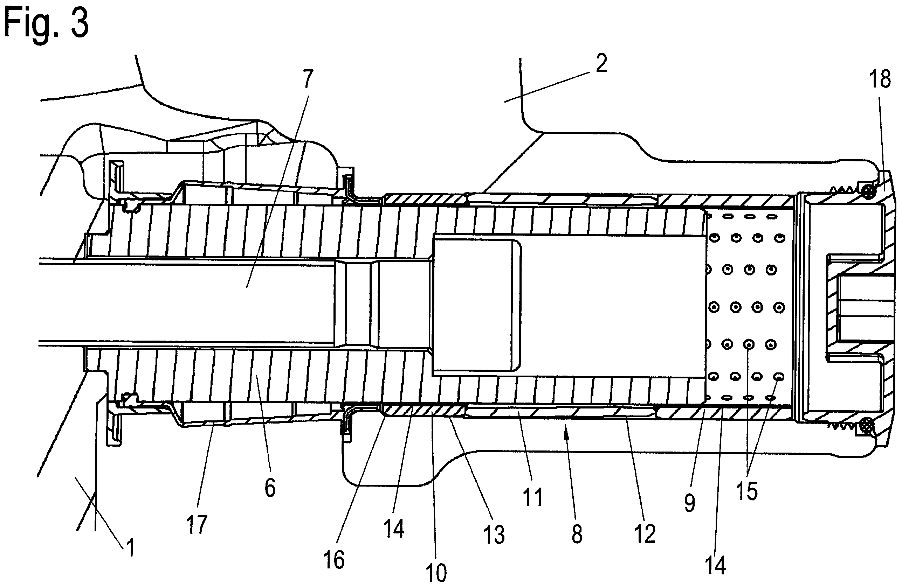

Der Bremssattel 2 ist an einem Bremsträger 1, bezogen auf die Bremsscheibe 3, axial verschiebbar angeordnet. Hierzu sind zwei Befestigungselemente vorgesehen, die jeweils einen mit dem Bremsträger 1 fest verbundenen Führungsholm 6 aufweisen, der mittels einer Schraube 7 am Bremsträger 1 befestigt ist (Fig. 2). Ein Befestigungselement ist als Loslager 5 und das andere als Festlager 4 ausgebildet, wobei letzteres als Einzelheit in den Figuren 2 und 3 abgebildet ist.

Zur Lagerung des Führungsholms 6, d.h. zur axialen Führung des Bremssattels 2, weist das Festlager 4 ein Gleitlager 8 auf, das erfindungsgemäß aus mindestens zwei, in axialer Richtung abständig zueinander angeordneten Metallhülsen 9, 10 und wenigstens einer dazwischen positionierten Abstandshülse 11 besteht, an deren Stirnseiten sich jeweils eine der Metallhülsen 9, 10 abstützt. Im Beispiel bilden die beiden Metallhülsen 9, 10 die jeweiligen Endbereiche des Gleitlagers 8.

Die Metallhülsen 9, 10 bestehen aus einem den Außenmantel bildenden Träger, vorzugsweise aus Stahl und einer darauf befestigten, einen Innenmantel 14 bildenden Schicht aus einem, für die Gleitlagerfunktion besonders geeigneten Material, insbesondere einem Buntmetall. Zur Gleitreibungminimierung sind, wie in der Figur 3 sehr deutlich zu erkennen ist, auf der dem Führungsholm 6 zugewandten Seite des Innenmantels 14, an der sich der Führungsholm 6 abstützt, Fettnäpchen 15 vorgesehen, zur Deponierung von Schmierfett.

Das Gleitlager 8 ist in eine Bohrung 12 des Bremssattels 1 eingeschoben und dort zumindest im Bereich der Metallhülsen 9, 10 reibschlüssig verschiebegesichert gehalten.

Diese Bohrung 12 ist als Stufenbohrung ausgebildet, mit einem Abschnitt 13 mit geringerem Durchmesser, der die dem Bremsträger 1 zugewandte Metallhülse 10 aufnimmt.

Diese Metallhülse 10 ist in ihrem Außendurchmesser und in ihrer Länge jeweils kleiner als die zweite Metallhülse 9, die gegenüberliegend angeordnet ist, wobei die Bohrung 12 in diesem Bereich durch eine Kappe 18, die kraftschlüssig gehalten ist, verschlossen ist.

Als Zentrier- und Einführhilfe weist die kürzere, also dem Bremsträger 1 zugewandte Metallhülse 10 auf der der Abstandshülse 11 abgewandten Seite im äußeren Randbereich eine Fase 16 auf.

In diesem Bereich ist im Bremssattel ein Balg 17 befestigt, der andererseits am Führungsholm 6 gehalten ist und der die gegenüber der Umgebung frei liegende Mantelfläche des Führungsholms 6 zwischen dem Bremsträger 1 und dem Bremssattel 2 als Dichtung überdeckt.

Während die Figur 2 eine Position des Bremssattels 2 auf dem Führungsholm 6 zeigt, wie sie sich bei einem unbenutzten Bremsbelag darstellt, gibt die Figur 3 eine Stellung wieder, in der der Bremsbelag bzw. dessen Reibbelag weitgehend abgenutzt ist, wobei dann der Bremssattel 2, typisch für eine Schiebesattel-Scheibenbremse gegenüber dem Bremsträger 1 fortgeschoben ist.

In der Figur 3 ist deutlich erkennbar, dass auch in dieser Position die längere Metallhülse 9 eine ausreichende Führungsfläche für den Führungsholm 6 bildet.

## Patentansprüche

1. Scheibenbremse für ein Nutzfahrzeug, mit einem eine Bremsscheibe umfassenden Bremssattel (2), der an einem ortsfesten Bremsträger (1) auf zwei, mit dem Bremsträger (1) verbundenen Führungsholmen (6), bezogen auf die Bremsscheibe axial verschiebbar gehalten ist, wobei die Führungsholme (6) jeweils in einem in einer Bohrung (12) des Bremssattels (2) verschiebesicher gehaltenen Gleitlager (8) geführt sind, **dadurch gekennzeichnet, dass** zumindest eines der Gleitlager (8) aus mindestens zwei, in axialer Richtung abständig zueinander angeordneten, am Führungsholm (6) anliegenden Metallhülsen (9, 10) und wenigstens einer dazwischen positionierten Abstandshülse (11) besteht, wobei die Metallhülsen (9, 10) stirnseitig an der Abstandshülse (11) anliegen.

2. Scheibenbremse nach Anspruch 1, **dadurch gekennzeichnet, dass** die Abstandshülse (11) aus Metall oder Kunststoff besteht.

3. Scheibenbremse nach Anspruch 1 oder 2, **dadurch gekennzeichnet, dass** die Abstandshülse (11) aus einem Rohrabschnitt gebildet ist.

4. Scheibenbremse nach einem der vorhergehenden Ansprüche, **dadurch gekennzeichnet, dass** die Abstandshülse (11) den Führungsholm (6) mit geringem Spiel umhüllt.

5. Scheibenbremse nach einem der vorhergehenden Ansprüche, **dadurch gekennzeichnet, dass** die Bohrung (12) als Stufenbohrung ausgebildet ist, mit einem in einem Abschnitt (13) kleineren Durchmessers, der auf der dem Bremsträger (1) zugewandten Seite der Bohrung (12) vorgesehen ist.

6. Scheibenbremse nach Anspruch 5, **dadurch gekennzeichnet, dass** die in dem Abschnitt (13) gelagerte Metallhülse (10) kürzer ist als die gegenüberliegende Metallhülse (9).

7. Scheibenbremse nach Anspruch 6, **dadurch gekennzeichnet, dass** der Außendurchmesser der längeren Metallhülse (9) größer ist als der Durchmesser des Abschnittes (13) mit kleinerem Durchmesser.

8. Scheibenbremse nach einem der vorhergehenden Ansprüche, **dadurch gekennzeichnet, dass** die Abstandshülse (11) aus einem in axialer Richtung formstabilen Material besteht.

9. Scheibenbremse nach einem der Ansprüche 6 bis 8, **dadurch gekennzeichnet, dass** die Länge der kürzen Metallhülse (10) etwa der Tiefe des Abschnittes (13) mit kleinerem Durchmesser entspricht.

10. Scheibenbremse nach einem der Ansprüche 6 bis 9, **dadurch gekennzeichnet, dass** die kürzere Metallhülse (10) auf ihrer dem Bremsträger (1) zugewandten Seite im äußeren Randbereich mit einer Fase (16) versehen ist.

11. Scheibenbremse nach einem der Ansprüche 6 bis 10, **dadurch gekennzeichnet, dass** die längere Metallhülse (9), die in dem dem Bremsträger (1) abgewandten Endbereich der Bohrung (12) angeordnet ist, den Führungsholm (6) in jeder Betriebsstellung zumindest bereichsweise mit Gleitkontakt überdeckt.

## Claims

1. A disk brake for a utility vehicle, having a brake calliper (2) that straddles a brake disc and is held such that it can be moved axially in relation to the brake disc on two guide bars (6) that are connected to the brake carrier (1) on a fixed brake carrier (1), the guide bars (6) each being mounted in a sliding bearing (8) that is held such that it cannot be moved in a bore (12) in the brake calliper (2), **characterised in that** at least one of the sliding bearings (8) consists of at least two metal sleeves (9, 10), which are arranged a certain distance from one another in the axial direction and abut the guide bar (6), and at least one spacer sleeve (11), which is positioned between the two metal sleeves (9, 10), the front faces of these metal sleeves (9, 10) abutting the spacer sleeve (11).

2. A disc brake according to claim 1, **characterised in that** the spacer sleeve (11) is made of metal or plastic.

3. A disc brake according to claim 1 or 2, **characterised in that** the spacer sleeve (11) takes the form of a section of tube.

4. A disc brake according to any one of the preceding claims, **characterised in that** the spacer sleeve (11) sheathes the guide bar (6) with a little play.

5. A disc brake according to any one of the preceding claims, **characterised in that** the bore (12) is designed as a stepped bore that has a smaller diameter in a portion (13) located on the side of the bore (12) facing the brake carrier (1).

6. A disc brake according to claim 5, **characterised in that** the metal sleeve (10) mounted in the portion (13) is shorter than the metal sleeve (9) located opposite.

7. A disc brake according to claim 6, **characterised in that** the external diameter of the longer metal sleeve (9) is greater than the diameter of the portion (13) of smaller diameter.

8. A disc brake according to any one of the preceding claims, **characterised in that** the spacer sleeve (11) is made of a material that is dimensionally stable in the axial direction.

9. A disc brake according to any one of claims 6 to 8, **characterised in that** the length of the shorter metal sleeve (10) corresponds approximately to the depth of the portion (13) of smaller diameter.

10. A disc brake according to any one of claims 6 to 9, **characterised in that** the outer edge region of side of the shorter metal sleeve (10) facing the brake carrier (1) is provided with a bevel (16).

11. A disc brake according to any one of claims 6 to 10, **characterised in that** the longer metal sleeve (9) arranged in the end region of the bore (12) facing away from the brake carrier (1) covers at least certain regions of the guide bar (6) with sliding contact in all operating positions.

## Revendications

1. Frein à disque d'un véhicule utilitaire ayant un étrier (2) de frein, qui comprend un disque de frein et qui, sur un support (1) de frein à poste fixe, est retenu coulissant axialement, rapporté au disque de frein, sur deux longerons (6) de guidage reliés au support (1) de frein, les longerons (6) de guidage étant guidés chacun dans un palier (8) lisse retenu sans possibilité de déplacement dans un trou (12) de l'étrier (2) de frein, **caractérisé en ce qu'**au moins l'un des paliers (8) lisses est constitué d'au moins deux manchons (9, 10) métalliques disposés à distance l'un de l'autre dans la direction axiale et s'appliquant au longeron (6) de guidage et d'au moins un manchon (11) d'entretoisement placé entre eux, les manchons (9, 10) métalliques s'appliquant du côté frontal au manchon (11) d'entretoisement.

2. Frein à disque suivant la revendication 1, **caractérisé en ce que** le manchon (11) d'entretoisement est en métal ou en matière plastique.

3. Frein à disque suivant la revendication 1 ou 2, **caractérisé en ce que** le manchon (11) d'entretoisement est formé d'un tronçon de tuyau.

4. Frein à disque suivant l'une des revendications précédentes, **caractérisé en ce que** le manchon (11) d'entretoisement entoure, avec un jeu petit, le longeron (6) de guidage.

5. Frein à disque suivant l'une des revendications précédentes, **caractérisé en ce que** le trou (12) est constitué sous la forme d'un trou à échelons ayant un diamètre plus petit dans une partie (13) prévue du côté, tourné vers le support (1) de frein, du trou (12).

6. Frein à disque suivant la revendication 5, **caractérisé en ce que** le manchon (10) métallique, monté dans la partie (13), est plus court que le manchon (9) métallique opposé.

7. Frein à disque suivant la revendication 6, **caractérisé en ce que** le diamètre extérieur du manchon (9) métallique plus long est plus grand que le diamètre de la partie (13) ayant le diamètre plus petit.

8. Frein à disque suivant l'une des revendications précédentes, **caractérisé en ce que** le manchon (11) d'entretoisement est en un matériau de forme stable dans la direction axiale.

9. Frein à disque suivant l'une de revendications 6 à 8, **caractérisé en ce que** la longueur du manchon (10) métallique court représente environ la profondeur de la partie (13) ayant le diamètre plus petit.

10. Frein à disque suivant l'une des revendications 6 à 9, **caractérisé en ce que** le manchon (10) métallique plus court est, du côté tourné vers le support de frein, pourvu, dans la partie de bord extérieur, d'un biseau (16).

11. Frein à disque suivant l'une des revendications 6 à 10, **caractérisé en ce que** le manchon (9) métallique plus long, qui est disposé dans la partie d'extrémité, loin du support (1) de frein, du trou (12), recouvre, avec contact glissant au moins par endroit, le longeron (6) de guidage dans chaque position de fonctionnement.
